# EUROPEAN PATENT APPLICATION

(11) **EP 4 675 414 A1**
(43) Date of publication of application: **07.01.2026**
(21) Application number: 24306107.4
(22) Date of filing: 04.07.2024
(51) Int. Cl.: G06F 3/04883, G06F 40/171

(54) **UPDATING DIGITAL DOCUMENTS**

(71) Applicant: MyScript, 44339 Nantes Cedex 3 (FR)
(72) Inventor: LORIANT, Nicolas, 44339 NANTES (FR); HEBERT, David, 44339 NANTES (FR); GUYETANT, Stéphane, 44339 NANTES (FR)
(74) Representative: RVDB Nantes

(57) **Abstract**

The disclosure relates to a device and method for updating a digital document. The method comprises: displaying an initial content comprising strokes classified and segmented into initial blocks; defining an update zone (UZ) around a detected handwriting input interaction (IN); defining a context zone comprising the update zone (UZ) and strokes related with the strokes of the update zone; defining an extended zone (EZ) including the context zone and initial blocks intersecting with the update zone; selecting all the strokes at least partially included into the extended zone (EZ); reclassifying the selected strokes of the extended zone; re-segmenting the reclassified strokes of the extended zone; retrieving the re-segmented strokes of the update zone; retrieving the classified and segmented strokes of the initial content; and overwriting the classified and segmented strokes of the update zone with the re-segmented strokes of the update zone to generate updated content (MC).

## Description

### Field of the invention

The present disclosure relates generally to the field of computing device interfaces capable of recognizing user input of text handwriting. In particular, the present disclosure concerns computing devices and corresponding methods for updating digital documents by processing handwriting input.

### Background

Computing devices continue to become more ubiquitous in daily life. They may take various forms such as computer desktops, laptops, tablet PCs, hybrid computers (2-in-ls), e-book readers, mobile phones, smartphones, wearable computers (including smartwatches, smart glasses/headsets), global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally consist of at least one processing element, such as a central processing unit (CPU), some form of memory, and input and output devices. The variety of computing devices and their subsequent uses necessitate a variety of input devices and interfaces to allow users to interact with their computing devices. One such input device is a touch sensitive surface such as a touchscreen or touchpad wherein the user input is received through contact between a user body part (e.g. a finger) or an instrument (e.g. a pen or stylus), and the touch sensitive surface. Another input device is an input surface that senses gestures made by a user above the input surface. A further input device is a position detection system which detects the relative position of either touch or non-touch interactions with a non-touch physical or virtual surface. Any of these methods of input can be used generally for drawing or inputting text. The user's handwriting is interpreted using a handwriting recognition system or method.

Handwriting recognition can be implemented in computing devices to input and process various types of handwritten input elements, hand-drawn or handwritten by a user, such as text content (e.g., alphanumeric characters) or non-text content (e.g., shapes, drawings). Once inputted on a computing device, the input elements are usually displayed as digital ink and undergo handwriting recognition to be manipulated as objects, for example text objects such as characters, words, lines or paragraphs or non-text objects such as primitives or shapes. The user handwriting input is typically interpreted using a real-time handwriting recognition system or method. To this end, either on-line systems (recognition carried out using a cloud-based solution or the like) or off-line systems may be used.

The user input may be drawings, diagrams or any other content of text, non-text or mixed content of text and non-text. Handwriting input may be made on a structured document according to guiding lines (base lines) which guide and constraint input by the user. Alternatively, a user may handwrite in free-mode, i.e. without any constraints of lines to follow or input size to comply with (e.g. on a blank page).

Document content analysis is a global process, including content classification and segmentation, that involves the identification and organization of different components within a document. Document classification refers to the task of categorizing the input based on their features and classifying into categories such as text or non-text including math, drawing, and so forth. Additionally, document segmentation is the process of grouping digital input into meaningful regions or groups, such as lines, paragraphs, equations, diagram, etc.

### Summary of the invention

In the context of handwriting recognition of interactive note taking, document content analysis means processing entire documents whenever content is added. This has at least two major drawbacks first, it is a highly intensive process, second, local changes (added input and removal) may modify content interpretation all over the document, such changes may result in irrelevant modifications of the document.

Therefore, an aim of the present invention is to improve processing of handwriting input interaction to a complete digital document.

An aim of the present invention is to allow updating of a digital content by processing handwriting input interaction on said digital document in an efficient and reliable manner.

The examples of the present invention that are described herein below provide computing devices, methods and corresponding computer programs for reconstructing an ink point sequence from an image, wherein the image depicts a captured handwriting input.

According to a first aspect, the invention provides a device configured to process a handwriting input interaction on a digital document, for instance to update said digital document. The device may comprise: a display configured to display the digital document; an input surface configured to detect the handwriting input interaction on an initial content of the digital document to generate a modified content of the digital document, wherein the initial content comprises strokes grouped into initial blocks; a memory configured to store the initial content and the modified content of the digital document; an update zone defining module configured to define an update zone, based on the detected input interaction, around the detected handwriting input interaction; a context zone defining module configured to define, based on the update zone and the modified content of the digital document, a context zone comprising the update zone and strokes temporally or spatially related with the strokes of the update zone; an extended zone defining module, configured to define, based on the update zone, the context zone and the modified content of the digital document, an extended zone including the context zone and the initial blocks intersecting with the update zone; a selecting module configured to select strokes enclosed in the extended zone; a classifying module configured to classify or reclassify the selected strokes according to predefined categories; a segmenting module configured to segment or re-segment the classified strokes; a retrieving module configured to select segmented strokes of the update zone following classification and segmentation of the strokes of the extended zone, wherein the selected strokes of the update zone include re-segmented strokes; and an overwriting module configured to overwrite the strokes of the update zone of the initial content with the selected segmented strokes of the update zone to generate an updated content of the digital document.

According to a particular embodiment, the detected handwriting input interaction is defined by at least one handwritten stroke for adding content to the digital document.

According to a particular embodiment, the handwriting input interaction comprises an erasing gesture for erasing strokes of the initial content, said detected handwriting input interaction being defined by the location of the erased strokes.

According to a second aspect, the present invention also relates to a corresponding method implemented by a computing device for processing handwriting input on a digital document comprising: displaying, on the display, an initial content of the digital document, wherein the initial content comprises strokes classified and segmented into initial blocks of predefined categories; detecting, on the input area, the handwriting input interaction on the digital document; defining an update zone around the detected handwriting input interaction; defining a context zone comprising the update zone and strokes temporally or spatially related with the strokes of the update zone; defining an extended zone including the context zone and initial blocks intersecting with the update zone; selecting all the strokes at least partially included into the extended zone; reclassifying the selected strokes of the extended zone according to the predefined categories; re-segmenting the reclassified strokes of the extended zone; retrieving the re-segmented strokes of the update zone; retrieving the classified and segmented strokes of the initial content of the digital document; and overwriting the classified and segmented strokes of the update zone of the initial content with the re-segmented strokes of the update zone to generate an updated content of the digital document.

According to a particular embodiment, the update zone is a first area defined around the detected handwriting input interaction.

According to a particular embodiment, the strokes of the context zone, spatially related with the strokes of the update, are enclosed in a second area defined around the first area.

According to a particular embodiment, the strokes of the context zone, temporally related with the strokes of the update zone, are enclosed within a range of temporal proximity from the strokes of the update zone according to a temporal input order of the strokes.

According to a particular embodiment, the initial content includes handwriting input strokes segmented into blocks of predefined categories.

According to a particular embodiment, the detected handwriting input interaction comprises at least a single point touch within the input area for adding content or editing the initial content.

According to a particular embodiment, the detected handwriting input interaction is defined by at least one handwritten stroke for adding content to the digital document.

According to a particular embodiment, the handwriting input interaction comprises an erasing gesture for erasing strokes of the initial content, said detected handwriting input interaction being defined by the location of the erased strokes.

According to a particular embodiment, the handwriting input interaction comprises a moving gesture for moving strokes of the initial content, said detected handwriting input interaction being defined by the initial location of the moved strokes and/or the final location of the moved strokes.

According to a particular embodiment, the predefined categories include text and non-text.

According to a particular embodiment, the input strokes classified as text are segmented into text blocks including text-lines.

According to a particular embodiment, the input strokes classified as non-text are segmented into non-text block including drawings, equations or graph.

According to a third aspect, the present invention relates to a computer readable program code (or computer program) including instructions for executing the steps of the method of the second aspect of the invention.

The different steps of the method of the second aspect may thus be defined by computer program instructions of a computer program. This computer program may be capable of being implemented in a computing device as defined hereafter, or more generally in a computer, this computer program comprising instructions adapted to the implementation of the steps of the method of the second aspect of the invention.

The computer program of the invention can be expressed in any programming language, and can be in the form of source code, object code, or any intermediary code between source code and object code, such that in a partially-compiled form, for instance, or in any other appropriate form.

According to a fourth aspect, the present invention relates to a non-transitory computer readable medium (or recording medium) having recorded thereon a computer readable program code (or computer program) of the third aspect of the invention.

In a particular embodiment, the invention relates to a non-transitory computer readable medium having a computer readable program code embodied therein, said computer readable program code being adapted to be executed to implement the method of the second aspect on a computing device, this computing device comprising a processor for executing the steps of the method of the second aspect.

The non-transitory computer readable medium previously mentioned can be any entity or device capable of storing the computer program. For example, the recording medium can comprise a storing means, such as a ROM memory (a CD-ROM or a ROM implemented in a microelectronic circuit), or a magnetic storing means such as a hard disk for instance.

The non-transitory computer readable medium of the invention can correspond to a transmittable medium, such as an electrical or an optical signal, which can be conveyed via an electric or an optic cable, or by radio or any other appropriate means. The computer program according to the disclosure can in particular be downloaded from the Internet or a network of the like.

Alternatively, the non-transitory computer readable medium can correspond to an integrated circuit in which a computer program is loaded, the circuit being adapted to execute or to be used in the execution of the methods of the invention.

The various embodiments defined above in connection with the method according to the second aspect of the present invention apply in an analogous manner to the device of the first aspect, as well as the computer program and the non-transitory computer readable medium of the present disclosure, and vice versa.

For each step of the method of the present invention as defined in the present disclosure, the computing device may comprise a corresponding module configured to perform said step, and vice versa.

### Brief description of the drawings

The present system and method will be more fully understood from the following detailed description of the examples thereof, taken together with the drawings. In the drawings:
Figure 1 shows a flow diagram of an example of the present method for editing the handwritten input elements of an electronic document.
Figure 2 shows a block diagram of a computing device in accordance with an embodiment of the present invention.
Figures 3A-3M show an example handwritten input text, to an initial content of a digital document, detected on the input interface by the computing device in accordance with an embodiment of the present invention.

### Detailed description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The use of the term "text" in the present description is understood as encompassing all characters (e.g. alphanumeric characters or the like), and strings thereof, in any written language and any symbols used in written text.

The term "non-text" in the present description is understood as encompassing freeform handwritten or hand-drawn content (e.g. shapes, drawings, etc.) and image data. Non-text content defines graphic or geometric formations in linear or non-linear configurations, including containers, drawings, common shapes (e.g. arrows, etc.) or the like.

Furthermore, the examples shown in these drawings are in a left-to-right written language context, and therefore any reference to positions can be adapted for written languages having different directional formats.

The various technologies described herein generally relate to capture, processing and management of hand-drawn or handwritten content on portable and non-portable computing devices. The systems and methods described herein may utilize recognition of user's natural writing and drawing styles input to a computing device via an input surface, such as a touch sensitive screen (as discussed later). Whilst the various embodiments are described with respect to recognition of digital ink handwriting input using so-called online recognition techniques, it is understood that application is possible to other forms of input for recognition, such as offline recognition involving a remote device or server to perform recognition.

The terms "hand-drawing" and "handwriting" are used interchangeably herein to define the creating of digital contents by users through use of their hands (or fingers) or an input device (hand-held stylus or digital pen, mouse...) on or with an input surface. The term "hand" or the like is used herein to provide concise description of the input techniques, however the use of other parts of a user's body for similar input is included in this definition, such as foot, mouth and eye.

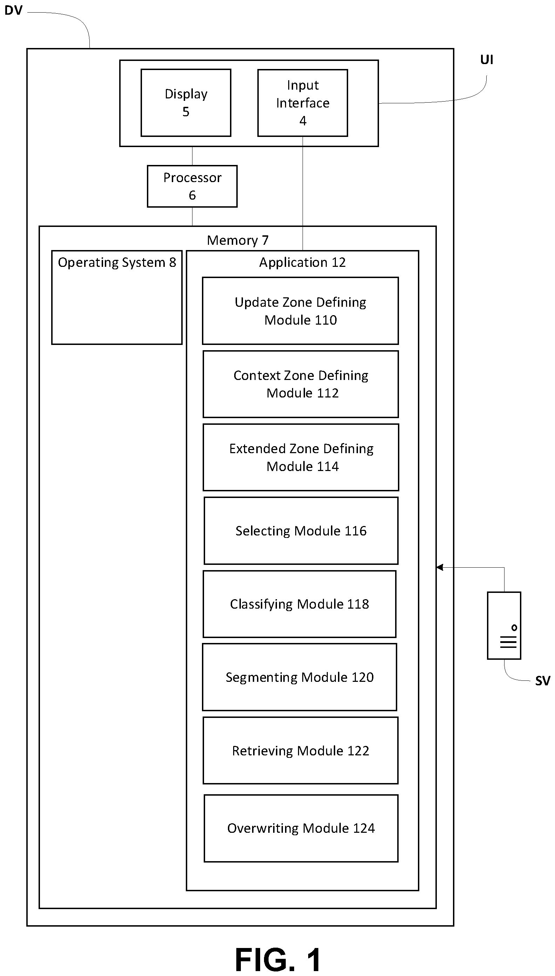

Figure 1 shows a block diagram of a system, comprising a computing device DV, for interacting, on a display area, with handwritten input elements.

The computing device (or digital device) DV may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing elements, some form of memory and input and output (I/O) devices. The components communicate with each other through inputs and outputs, such as connectors, lines, buses, links networks, or others known to the skilled person.

The illustrated example of the computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least some of the display 5 is co-located with at least one input area 4. The input area 4 may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area 4 may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory 7 can have a distributed architecture where various components are situated remote from one another but can also be accessed by the processor 6. Further, the memory 7 may be remote from the device, such as at a server or cloud-based system, which is remotely accessible by the computing device DV. The memory 7 is coupled to the processor 6, so the processor 6 can read information from and write information to the memory 7. In the alternative, the memory 7 may be integral to the processor 6. In another example, the processor 6 and the memory 7 may both reside in a single ASIC or other integrated circuit.

The software in the memory 7 includes an operating system 8 and an application 12 in the form of a non-transitory computer readable medium having a computer readable program code embodied therein. The operating system 8 controls the execution of the application 12. The operating system 8 may be any proprietary operating system or a commercially or freely available operating system, such as WEBOS, WINDOWSO, MAC and IPHONE OS^{®}, LINUX, and ANDROID. It is understood that other operating systems may also be utilized. Alternatively, the application 12 of the present system and method may be provided without use of an operating system.

The application 12 includes one or more processing elements related to detection, management and treatment of user input (discussed in detail later). The software may also include one or more other applications related to handwriting recognition (HWR), different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

The present system and method allow handwriting to be input virtually anywhere on the input area 4 of the computing device DV and this input is rendered as digital ink in the input position on the display area 5. The input area 4 may be provided as an unconstrained canvas that allows users to create graphical objects (text objects or non-text objects as further detailed below) anywhere without worrying about sizing or alignment. However, an alignment structure in the form of a line pattern background may be provided for guidance of user input and the alignment of digital and typeset ink objects. In any case, as users may input handwriting that is not closely aligned to the line pattern or may desire to ignore the line pattern and write in an unconstrained manner, such as diagonally or haphazardly, the HWR system is able to recognize this freely positioned handwriting. This 'free' input may be rendered as digital ink at the input position.

Digital ink entered on or via the input surface 4 is processed by the processor 6 as strokes. A user may enter a stroke with a finger or some instrument such as a pen or stylus suitable for use with the input surface. The user may also enter a stroke by making a gesture above the input surface 4 if technology that senses motions in the vicinity of the input surface 4 is being used, or with a peripheral device of the computing device DV, such as a mouse or joystick. A stroke is characterized by at least the stroke initiation location, the stroke termination location, and the path connecting the stroke initiation and termination locations. Because different users may naturally write the same object, e.g., a letter, a shape, a symbol, with slight variations, the HWR system accommodates a variety of ways in which each object may be entered whilst being recognized as the correct or intended object.

The handwriting input is captured as a plurality of ink points along the handwritten ink trace. The number of ink points may be sampled according to a temporal frequency, the subsequent segmentation of the plurality of ink points based on temporal information (i.e., into equal duration segments) corresponds to splitting the strokes into a plurality of segments (or ink segments) having an equal number of ink points over an equal time span (with same durations but potentially with different lengths).

The HWR system includes stages and corresponding modules such as preprocessing, recognition and output. The preprocessing stage processes the digital ink to achieve greater accuracy and reducing processing time during the recognition stage. This preprocessing may include normalizing of the path connecting the stroke initiation and termination locations by applying size normalization and/or methods such as β-spline approximation to smooth the input. The preprocessed strokes are then passed to the recognition stage which processes the strokes to recognize the objects formed thereby. The recognized objects are then output to the display 5 as a digital ink or typeset ink versions of the handwritten input.

The recognition stage may include different processing steps and associated modules. Three expert systems, a segmentation expert system, a recognition expert system, and a language expert system, collaborate through dynamic programming to generate the output. An expert system is a computer system emulating the decision-making ability of a human expert. Expert systems are designed to solve complex problems by reasoning through bodies of knowledge, represented mainly as if-then rules rather than through conventional procedural programming.

Some aspects of these experts are described here below for illustrative purpose only to facilitate understanding of the present invention. However, no further detail is provided to avoid unnecessarily obscuring the present disclosure. Details of implementing handwriting recognition can for instance be found in EP patent application N° 1 836 651 A1.

The segmentation expert defines the different ways to segment the input strokes into individual element hypotheses, e.g., alphanumeric characters and mathematical operators, text characters, individual shapes, or sub expression, in order to form expressions, e.g., words, mathematical equations, or groups of shapes.

For example, the segmentation expert may form the element hypotheses by grouping consecutive strokes of the original input to obtain a segmentation graph where each node corresponds to at least one element hypothesis and where adjacency constraints between elements are handled by the node connections.

Alternatively, the segmentation expert may employ separate experts for different text or non-text input, such as characters, drawings, equations, and music notation.

To this end, the segmentation expert may process the plurality of ink points into a plurality of segments each corresponding to a respective sub-stroke of the stroke represented by the original input. Each sub-stroke comprises a respective subset of the plurality of ink points representing the stroke.

Alternatively, the segmentation expert may process the strokes of the original input by applying features of the ink strokes as input vector to a neural network clustering algorithm. A current stroke is characterized by the stroke initiation location, the stroke termination location, and the path connecting the stroke initiation and termination locations including a plurality of ink points localized in a rectangular coordinate space (defined based on a screen of the touch-based user interface) with each ink point being associated with (X,Y) coordinates in the rectangular coordinate space, and a plurality of timestamps associated respectively with the plurality of ink points. Additional features of a stroke may be calculated such as geometrical features, contextual features with a first preceding stroke and a second preceding stroke or temporal dependencies between successive strokes. As a non-limiting and illustrative example, any one or any combination of the following features may be used as feature vector of a stroke:
- a current stroke center;
- a current stroke width and a current stroke height;
- widths of groups formed by the current stroke and the first or the second preceding strokes;
- distances between a center of the current stroke and centers of the first or the second preceding stroke centers; a distance between a last point of the current stroke and a first point of the preceding stroke;
- coordinates of a geometric center of the group formed by the current stroke and the first or the second preceding stroke; and
- a bounding box of the current stroke may be used to determine at least one feature of the current stroke. The bounding box is defined by a vertical distance y between the top and bottom horizontal sides of the bounding box and by a horizontal distance x between the left and right vertical sides of the bounding box.

Additional features characterizing a stroke may be implemented in the feature vector, for example the outcome of a classification of the stroke, wherein each stroke may be classified according to predefined categories, such as text or non-text category.

The outcome of the segmentation of the stroke, wherein each classified stroke may be segmented into blocks of the predefined categories, may be linked to the feature vector of the stroke. Each block of the content of the digital document may be referenced as an object of the digital document. A reference object of the digital document, to which belong the stroke, may be linked to the feature vector of the stroke.

Each stroke may be therefore characterized by a feature vector and stored in the memory.

The insight behind sub-stroke segmentation is to obtain a sequential representation that follows the path of the stroke. Each segment corresponds as such to a local description of the stroke. Compared to representing the stroke as a mere sequence of points, sub-stroke segmentation permits to maintain path information (i.e., the relationships between points within each segment) which results in a reduction in computation time. Different sub-stroke segmentation techniques may be used according to different embodiments.

The recognition expert associates a list of word candidates with probabilities or recognition scores for each node of the segmentation graph. These probabilities or recognition scores are based on language information. The language information defines all the different characters and words of the specified language.

The language expert generates linguistic meaning for the different paths in the segmentation graph using language models (e.g., grammar or semantics). The expert checks the candidates suggested by the other experts according to linguistic information. The linguistic information can include a lexicon, regular expressions, etc. and is the storage for all static data used by the language expert to execute a language model. A language model can rely on statistical information on a given language.

In the context of handwriting recognition of interactive note taking, the present system and methods describe the processing of new added content into an existing document which limit the scope of the document analysis while conserving local context for improving performances and resulting recognition of the entire document.

According to a particular embodiment, when running the applications 12 stored in the memory 7 (figure 1), for each step of the method of the present invention, further explained below, the computing device may comprise a corresponding module configured to perform said step, namely: an update zone defining module 110, a context zone determining module 112, an extended context zone determining module 114, a selecting module 116, a classifying module 118, a segmenting module 120, a retrieving module 122 and an overwriting module 124.

The update zone defining module 110, coupled to the memory, is configured to receive as input the plurality of ink points of the detected handwriting input interaction and the initial content of the digital document, and to define, based on this input, an update zone of the digital document around the detected interaction.

The handwriting input interaction is characterized (or defined) by at least one handwritten stroke applied by the user and comprises a plurality of ink points localized in a rectangular coordinate space (defined based on a screen of the touch-based user interface) with each ink point being associated with (X,Y) coordinates in the rectangular coordinate space, and a plurality of timestamps associated respectively with the plurality of ink points.

The handwriting input interaction may be defined by the at least one handwritten stroke for adding content to the digital document.

The handwriting input interaction may be (or comprise) an erasing gesture for erasing content of the digital document wherein, the detected input interaction may be defined by the erased gesture stroke or by the erased content. This erasing gesture may define strokes, of the digital document, which are erased. The handwriting input interaction is for instance defined by the location of the erased strokes.

The handwriting input interaction may be (or comprise) a moving gesture for moving content of the digital document wherein the detected input interaction may be defined by the final location of the moved content and/or by the initial location of the moved content.

The update zone may be a first area defined by a rectangle around a bounding box of the detected input interaction. A bounding box of the detected input interaction is determined around the extent of the detected input. The bounding box is defined by a vertical distance y between the top and bottom vertical extremums of the input stroke and by a horizontal distance x between the left and right horizontal extremums of the input stroke.

In one example, the update zone may be defined by an enlarged rectangle around the bounding box of the detected input interaction by increasing the vertical and horizontal sides of the bounding box. The enlarged rectangle defining the update zone may be, for example, by increasing the horizontal and the vertical sides by a first distance in each direction, or by increasing the horizontal side by a second distance in the left and right direction and/or increasing the vertical side by a third distance in the top and bottom direction. The first, second and third distances may be relative to any side of the bounding box. The first, second and third distances may be relative to the plurality of ink points of the handwriting input interaction. The fixed, first or second distances may be set, for example, according to the extent of the initial content of the document, or to the extent of the viewport of the document as displayed on the display 5.

In another example, the update zone may be defined as a circle, or an ellipse drawn around a reference point of the detected input interaction. The coordinates (x, y) of this reference point may be defined as the center of geometry of the bounding box of the detected input interaction. The circle may be drawn according to a chosen radius around the reference point. The chosen radius may be set according to the extent of the extent of the initial content or the viewport of the document.

The context zone defining module 112, coupled to the update zone defining module and the memory, is configured to receive the area defining the updated zone and the modified content of the digital document and to define a context zone comprising the update zone and strokes temporally or spatially related with the strokes of the update zone.

In one embodiment, the context zone is a second area enclosing the update zone merged into a second portion of the modified content of the digital document.

In one example, the context zone may be defined by an enlarged rectangle around the update zone by increasing the vertical and horizontal sides of the update zone. The enlarged rectangle defining the context zone may be, for example, by increasing the horizontal and the vertical sides of the update zone by a fourth distance in each direction, or by increasing the horizontal side by a fifth distance in the left and right direction and/or increasing the vertical side by a sixth distance in the top and bottom direction. The fourth, fifth and sixth distances may be set according to a context factor, wherein a context factor times the first, second and third distances respectively allow to calculate the extent of the context zone.

In another example, the context zone may be defined as a circle, or an ellipse drawn around a reference point of the update zone. The coordinates (x, y) of this reference point may be defined as the center of geometry of the update zone. The circle may be drawn according to a chosen radius around the reference point.

In another embodiment, the strokes of the context zone are temporally related with the strokes of the updated zone. The temporally related strokes are enclosed within a range of temporal proximity from strokes of the update zone according to a temporal input order of the strokes.

The extended zone defining module 114, coupled with the context zone defining module and the memory, is configured to receive as input the update zone, the context zone and the modified content, to define based on this input an extended zone including the context zone and content blocks of the initial content intersecting with the update zone.

The initial content of the digital document has been processed to group strokes of digital ink into initial blocks of one or more strokes, wherein a block may be a text block or a non-text block further recognized by the handwriting recognition system as detailed above. A rectangle defined by a vertical distance 'y' between the top and bottom vertical extremums of the block and by a horizontal distance 'x' between the left and right horizontal extremums of the block defines the geometrical extent of the block. Initial blocks intersecting with the perimeter of the update zone are selected by the computing device. The areas of selected blocks are merged into the area of context zone to define the extended zone.

The selecting module 116, coupled to the extended zone defining module, is configured to receive as input the modified content of the extended zone and to select, based on this input, the strokes of the modified content enclosed in the extended zone.

Therefore, the selected strokes include strokes of the initial content enclosed in the extended zone together with the detected strokes of the handwriting input.

In one example, each stroke completely enclosed within the extended zone within the selected zone is recognized by the computing device as at least one selected stroke.

In another example, each stroke completely enclosed within the extended zone and each stroke only partially enclosed within the selected zone are recognized by the computing device as at least one selected stroke.

The classifying module 118, coupled with the selecting module, is configured to receive the selected strokes and to classify the selected strokes according to predefined categories.

In one example, the predefined categories may include text or non-text.

In another example, the predefined categories may include text, math or drawing.

The classifying process may be performed by any manner known to the skilled person. An exemplary implementation is described in US Patent application N° 2017/0109578 A1.

As an example of classifying process, the classifying module 118 may group strokes using spatial and temporal considerations to build hypotheses of which strokes may belong to non-text or text elements. The spatial considerations may include distance between strokes, geometry of the strokes, overlapping of the strokes, relative positions of the strokes... The temporal considerations may include the time order of stroke input. Probability score may be calculated such that only hypotheses with a sufficiently high score (above a threshold) are retained. Features for each group of strokes are then extracted in consideration of shape and text language models. The features may include separation distances, changes in direction within strokes, overlap, direction of stroke pattern, curvature... The strokes may then be classified by the classifying module 118 into text and non-text by testing hypotheses based on all of the collected information, including extracted features of the group of strokes within those hypotheses and the spatial and temporal information of the strokes within those groups. As already mentioned, other techniques of non-text/text differentiation may however be contemplated. The classification outcomes, including the classification as text or non-text of a stroke, may be assigned as a feature of the stroke, implemented within the feature vector of the stroke and stored in the memory. The classification outcomes depend on spatial and/or temporal considerations, therefore the classification outcomes of one identified stroke may change when the content of the digital document and the contextual information of the stroke is modified. One identified stroke included into the extended zone of the initial content of the digital document may be reprocessed following detection of a new handwriting interaction. The reclassification outcome of the identified stroke may be identical or different from the initial classification, depending on the contextual information. The outcome of a re-classification of the identified stroke is stored in the memory as the classification feature of a second occurrence of the identified stroke feature vector.

A segmenting module 120, coupled to the classifying module, configured to receive the classified strokes and to segment the classified strokes into blocks of one or more strokes.

Each block is either a text block or non-text block. This grouping allows generating or combining the strokes into coherent single blocks, as text blocks or non-text blocks. Each stroke contained in a text block may be recognized as a text object. For example, a text symbol, a word or a text line.

For example, text line extraction is one key step in text handwriting recognition. This operation aims at recognizing different text lines from text content input by a user in a free handwriting format. In other words, text line extraction allows a computing device to determine to which text line various input strokes belong. The text line extraction process may be performed by any manner known to the skilled person, such as optimization based methods or distance metric learning based methods.

In another example, a text paragraph may be further identified as a sequential gathering process that can be considered as a bottom-up approach: it starts from the smallest entities (the lines) and gathers (groups) them until having the biggest entities (the paragraph). This sequence can be described as an iterative step of spatially gathering text lines to create text paragraph hypotheses.

The segmentation outcome is assigned each stroke as a block identifier (BID) and is linked to the respective feature vector stored in the memory. The segmentation outcomes depend on spatial and/or temporal considerations, therefore the segmentation outcomes of one identified stroke may change when the content of the digital document and the contextual information of the stroke is modified. One identified stroke included into the extended zone of the initial content of the digital document may be reprocessed following detection of a new handwriting interaction. The resegmentation outcome of the identified stroke may be identical or different from the initial segmentation outcome, depending on the contextual information. The outcome of a re-segmentation of the identified stroke is stored in the memory as the block ID linked to the second occurrence of the identified stroke feature vector.

In another embodiment, the classifying module 118 and the segmenting module 120 are replaced by one analyzing module 130, coupled to the selecting module 116, and configured to receive the selected strokes of the extended zone and to perform the stroke classification and the stroke segmentation simultaneously, so as to couple the two steps and minimize the errors by maximizing the usage of involved features. The analyzing module may process may be performed by any manner known to the skilled person, such as attention-based graph neural network. For example, the stroke classification and the text line grouping may be formulated as node classification and node clustering problems in a relation graph, which is constructed based on the temporal and spatial relationship between strokes.

A retrieving module 122, coupled to segmenting module, is configured to retrieve the re-classified and re-segmented strokes from second occurrences of the feature vectors stored in the memory and to select the re-segmented strokes forming blocks at least partially enclosed into the update zone. Following the detection of the handwriting interaction, the classification and the segmentation of the strokes of the extended zone of the initial content have been reprocessed as re-classified strokes and re-segmented blocks of the modified content and stored in second occurrences of stroke feature vectors in the memory. The outcomes of the reclassification and/or the re-segmentation of the second occurrences of the strokes may be identical or different compared to the first occurrences of the same strokes. The block ID arising from the re-classification and re-segmentation processes may be linked and retrieved from the second occurrences of the feature vector of each stroke.

An overwriting module 124, coupled to the memory and to the retrieving module 122, is configured to receive the initial content of the digital document from the memory and the re-classified and re-segmented strokes, stored as second occurrences in the memory, of the update zone from the retrieving module and to overwrite the segmented strokes of the update zone of the initial content with the re-segmented strokes of the update zone of the modified content to generate an updated content of the digital document.

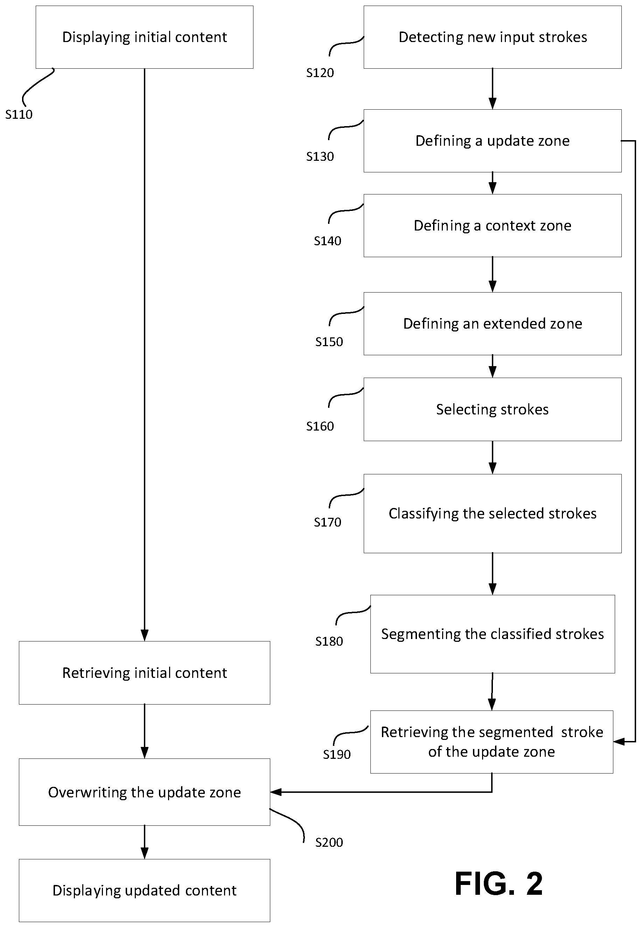

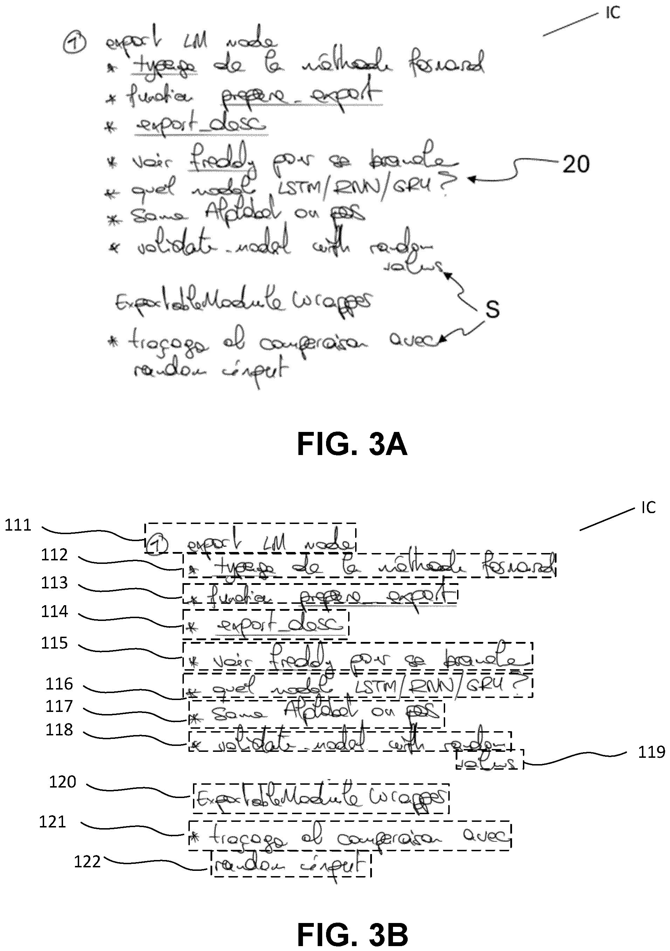

In accordance with a particular embodiment of the present invention, a method for processing handwriting input on a digital document implemented by the computing device DV is now described with reference to figure 2 and illustrated by means of examples represented in figures 3A to 3M. More specifically, the computing device DV implements this method by executing the application 12 stored in the memory 7.

In a displaying step S110, the computing device DV displays an initial content of the digital document.

The computing DV may obtain the digital document in any appropriate manner, either by retrieving it from an external source, by retrieving it from a local memory, or by detecting it by means of the input surface 4 for instance.

The initial content may be digital ink or typeset ink. The initial content of the digital document, be it handwriting or typing, is processed by the ink management system for rendering of the content as digital or typeset ink, respectively.

For example, the digital ink may have been rendered from user handwriting input as strokes entered onto the input interface 4, from an image captured by the image capture device or otherwise loaded to the memory 7 of the device DV, for example.

The handwriting input elements are usually displayed as digital ink and undergo handwriting recognition to be manipulated as objects, for example text objects such as characters, words, lines or paragraphs or non-text objects such as primitives or shapes.

Other techniques of handwriting recognition may be applied, such as offline recognition, referring to techniques of recognition of digital ink as static images usually digitized as offline documents by capturing images with a scanner or camera.

With respect to displayed typeset ink, the elements (e.g., text characters) may also be considered to include ink trace. However, since typeset input is not intrinsically printed or typed using 'strokes', typeset ink is not readily ascertainable therefrom. For this reason, conventional optical character recognition (OCR) methods, have typically sought to find the skeleton of the imaged typeset characters through thinning and other techniques, or to directly learn the pixel distribution for each character without skeletonization. It is possible, by treating the determined skeleton as the ink information, to segment and process the skeleton using recognition processing (such as that of the handwriting recognition system described earlier) in order to recognize the skeletonized characters.

The initial content of the digital document is organized into initial blocks of different categories. The different categories comprise text or non-text content.

The initial content considered as strokes is analyzed and processed into blocks of one or more strokes. This grouping allows generating the strokes into coherent single blocks, as the text blocks (forming objects such as characters, words, lines or paragraphs) or the non-text blocks (forming objects such as primitives and shapes, or drawings) as further explained below.

Generated blocks may form the element hypotheses by grouping consecutive strokes of the original input.

Generating blocks may employ separate sub-modules for different text or non-text input, aimed at recognizing different categories or types of objects, such as characters, drawings, shapes, equations, and music notation therefor, a stroke classification problem and a segmentation problem in ink documents may be considered as two separate tasks.

Classifying strokes into different categories is an important step in an automatic document recognition process. To tackle this task, it is crucial to integrate different types of contextual information. Classifying the strokes aims to put a label on each stroke telling if it's a textual stroke or a non-textual stroke. Text strokes aims to be recognized and converted at some point. The non-textual strokes are actually all the other strokes. The non-textual strokes can be any type of strokes, such as drawings, table structures, recognizable shapes, etc.

For stroke classification, many known methods, as further explained below, are possible to exploit temporal and spatial contextual information.

The segmentation may be performed by grouping strokes of digital ink into blocks of one or more strokes, each block being either a text block or non-text block. This grouping allows generating or combining the strokes into coherent single blocks, as text blocks or non-text blocks.

A text block is the input entity of the text recognition process performed by a text recognizer. A page can contain several text blocks without any prior assumption on their layout in the page. A page can contain several text blocks without any prior assumption on their layout in the page. Each stroke contained in a text block may be a part of a text symbol.

Different strategies may be implemented to aggregate classification results for each stroke.

The generation of blocks may be based on other predefined constraints such as stroke level constraints, spatial constraints, etc. to make it more comprehensible, robust and useful for subsequent recognition.

The interaction between stroke classification and segmentation problems may be considered, where temporal and spatial merge procedures are proposed to correct the errors produced in stroke classification.

The stroke classification model and segmentation model used may be based on different methods. In this way, the exploitation of contextual information in two tasks is not optimized, and the system may suffer from error accumulation in stroke classification. Therefore, unified methods may also address the stroke classification and segmentation problems simultaneously, so as to couple the two tasks and minimize the errors by maximizing the usage of involved features.

In other words, content classification and segmentation are processes in document analysis and understanding that involve the identification and organization of different components for partitioning the document.

In a detecting step S120, the computing device is detecting, on the input area, a handwriting input interaction on the digital document.

The handwriting input interaction onto the input area 4 is performed through the use of gestures in relation to the input surface 4, through touch, force and/or proximity depending on the screen technology of the device DV. The handwriting input interaction may be handled differently depending on the ability of the computing device to differentiate a users' finger from a stylus or pen (by which the device defines passive and active styli) or the ability of a stylus to indicate or communicate to the device that it is being used for handwriting or the ability of users to provide such an indication. By default, and in devices which do not differentiate, any single-point touch or hover event within the input area 4 is to be considered as handwriting input interaction, for adding content to the digital document or for editing the initial content of the digital document.

The input recognition system of the present system and method is configured to process handwriting input information for recognition and interpretation of the input.

Incremental recognition may be performed by parsing the strokes to the recognizer as they are received and the recognizer processing groups of the strokes to output recognition results, even as input continues.

According to an embodiment, the handwriting input interaction represents a stroke applied by the user and comprises a plurality of ink points and a plurality of timestamps associated respectively with the plurality of ink points. The plurality of ink points are localized in a rectangular coordinate space (defined based on a screen of the touch-based user interface) with each ink point being associated with (X,Y) coordinates in the rectangular coordinate space. Therefore, each ink point is defined by a position (X,Y) and an associated timestamp (t). Additional features, as further detailed above, of the detected stroke added onto the digital document, may be calculated to generate a feature vector of the handwriting input interaction. A feature vector of the handwriting input interaction may be stored in the memory.

According to another embodiment, the handwriting input interaction may correspond to content being edited through an input interaction recognized as a gesture stroke. The handwriting input interaction may have particular characteristics or attributes which is intended to realize a corresponding action for editing the initial content.

The features associated with an input interaction include both intrinsic geometric features and neighborhood features, describing both the shape of input stroke and the content in which the input stroke is drawn. These two types of information are complementary and allow for an accurate recognition of the stroke as a gesture stroke or a non-gesture stroke. Applying the plurality of intrinsic geometric features and neighborhood features as an input sequence representing the stroke to a trained stroke classifier to generate a vector of probabilities, which include a probability that the stroke is a non-gesture stroke and a probability that the stroke is a given gesture type of a set of gesture types. For example, gesture stroke may correspond to the following actions: Scratch-out (an erase gesture having a zigzag or a scribble shape), Strike-through (an erase gesture performed with a line segment; the line segment can be horizontal, vertical, or slanted), Split (a gesture to split a single sequence of characters into two sequences of characters, or a single line into two lines, or a single paragraph into two paragraphs), Join (a gesture to join two sequences of characters into a single sequence of characters, or two lines into a single line, or two paragraphs into a single paragraph), Surround (a gesture to surround content), and Underline

The handwriting input interaction may correspond to content being added or edited by the user and rendered as digital ink wherein a modified content of the digital document is displayed on the display 5 (or other display).

The handwriting input interaction may be (or comprise) at least one handwritten stroke for adding content to the digital document.

The handwriting input interaction may be (or comprise) an erasing gesture for erasing strokes of the initial content wherein, the detected input interaction may be defined as the erased gesture stroke or by the erased strokes.

The handwriting input interaction may be (or comprise) a moving gesture for moving strokes of the initial content wherein the detected input interaction may be defined by the final location of the moved strokes and/or by the initial location of the moved strokes.

In an update zone defining step S130, the computing device defines an update zone around the detected input interaction.

The update zone is a first area enclosing the detected input interaction included into a first portion of the modified content of the digital content.

The update zone may be a first area defined by a rectangle around a bounding box of the detected input interaction. A bounding box of the detected input interaction is determined around the extent of the detected input. The bounding box is defined by a vertical distance y between the top and bottom vertical extremums of the input stroke and by a horizontal distance x between the left and right horizontal extremums of the input stroke

In one example, the update zone may be defined by an enlarged rectangle around the bounding box of the detected input interaction by increasing the vertical and horizontal sides of the bounding box. The enlarged rectangle defining the update zone may be, for example, by increasing the horizontal and the vertical sides by a first distance in each direction, or by increasing the horizontal side by a second distance in the left and right direction and/or increasing the vertical side by a third distance in the top and bottom direction. The first, second and third distances may be relative to any side of the bounding box. The first, second and third distances may be relative to the plurality of ink points of the handwriting input interaction. The fixed, first or second distances may be set, for example, according to the extent of the initial content of the document, or to the extent of the viewport of the document as displayed on the display 5.

In another example, the update zone may be defined as a circle, or an ellipse drawn around a reference point of the detected input interaction. The coordinates (x, y) of this reference point may be defined as the center of geometry of the bounding box of the detected input interaction. The circle may be drawn according to a chosen radius around the reference point. The chosen radius may be set according to the extent of the extent of the initial content or the viewport of the document.

In a context zone defining step S140, the computing device defines a context zone around the update zone.

The context zone is a second area enclosing the update zone merged into a second portion of the modified content of the digital document.

In one example, the context zone may be defined by an enlarged rectangle around the update zone by increasing the vertical and horizontal sides of the update zone. The enlarged rectangle defining the context zone may be, for example, by increasing the horizontal and the vertical sides of the update zone by a fourth distance in each direction, or by increasing the horizontal side by a fifth distance in the left and right direction and/or increasing the vertical side by a sixth distance in the top and bottom direction. The fourth, fifth and sixth distances may be set according to a context factor, wherein a context factor times the first, second and third distances respectively allow to calculate the extent of the context zone.

In another example, the context zone may be defined as a circle, or an ellipse drawn around a reference point of the update zone. The coordinates (x, y) of this reference point may be defined as the center of geometry of the update zone. The circle may be drawn according to a chosen radius around the reference point.

In an extended zone defining step S150, the computing device defines an extended zone including the context zone and content blocks intersecting with the update zone.

The initial content of the digital document has been processed to classify and segment strokes of digital ink into initial blocks, wherein a block may be a text block or a non-text block further recognized by the handwriting recognition system as detailed above. A rectangle defined by a vertical distance 'y' between the top and bottom vertical extremums of the block and by a horizontal distance 'x' between the left and right horizontal extremums of the block defines the geometrical extent of the block. Initial blocks intersecting with the perimeter of the update zone are selected by the computing device. The areas of selected blocks are merged with the area of context zone to define the extended zone.

In a stroke selecting step S160, the computing device selects the strokes of the modified content enclosed in the extended zone. Therefore, the selected strokes include strokes of the initial content enclosed in the extended zone together with the detected strokes of the handwriting input.

In one example, each stroke completely enclosed within the extended zone within the selected zone is recognized by the computing device as at least one selected stroke.

In another example, each stroke completely enclosed within the extended zone and each stroke only partially enclosed within the selected zone are recognized by the computing device as at least one selected stroke. An algorithm may be executed by the computing device DV, for each stroke only partially enclosed in the extended zone, to determine the proportion (or percentage) of the input stroke within (or conversely outside) the extended zone and to deduce therefrom whether the input stroke is included in the selection. For instance, a partially enclosed input stroke may be recognized as part of the selection if the relative proportion of the stroke enclosed within the extended zone reaches a predetermined threshold.

In a selected stroke classifying step S170, the computing device performs classification of the selected strokes according to the predefined categories including text or non-text strokes. The selected strokes include the selected strokes from the initial content and the selected strokes of the handwriting input interaction. The selected strokes are classified according to any known methods mentioned above, exploiting temporal and spatial contextual information available within the context of the extended zone.

Therefore, the selected strokes of the initial content are reclassified together with the selected stroke of handwriting input interaction according to the modified content of the extended zone. The selected strokes are classified within the spatial context of the extended zone.

In a stroke segmenting step S180, the computing device performs the segmentation of the reclassified strokes.

The reclassified strokes of the extended zone of the modified content are grouped into newly modified blocks of one or more strokes, each modified block being either a text block or non-text block which may be further recognized as objects. The generation of modified blocks may be based on predefined constraints such as stroke level constraints and/or spatial constraints defined within the extended zone of the modified content, therefore modifying the initial block segmentation which was performed over a different area of the digital document. The modified blocks are formed by the strokes of the extended zone initially included in the initial content together with the strokes of the handwriting input interaction to form the modified blocks, therefore the modified block arise from the re-segmentation of the selected strokes of the initial content together with the strokes of the handwriting input interaction.

In another embodiment, the stroke classification step and segmentation step are processed simultaneously, so as to couple the two tasks and minimize the errors by maximizing the usage of involved features.

In a retrieving step S190, the computing device retrieves the re-segmented strokes of the update zone which were re-segmented within the extended zone. Therefore, the segmentation of the strokes in the area defined by the update zone is modified by the detection of the handwriting input strokes, the analysis of the strokes in the area of the extended zone outside of the update zone is most probability identical to the segmentation of the initial content. Therefore, the initial content of the digital document is not updated with the entire newly re-segmented strokes but only with the re-segmented strokes of the update zone. The re-segmentation is based on the temporal and spatial relationship between strokes defined within the extended zone of the modified content. But the updated blocks resulting from the re-segmentation are most probably modified in the vicinity of the handwriting input, therefore the updated content of the digital document is taking into account only the re-segmented strokes of the update zone as further explained below.

In an overwriting step S200, the computing device overwrites the segmented strokes belonging to the update zone of the initial content of the digital document with the re-segmented strokes of the update zone of the modified content to generate an updated content of the digital document. The updated content of the digital document includes the segmented strokes of the initial content excluding the segmented strokes of the update zone of the initial content. The updated content includes all the re-segmented strokes of the update zone of the modified content.

For the purpose of illustration, Figures 3A - 3I show an example of the processing of a handwriting input IN on a digital document according to a particular embodiment of the present system and method.

Figure 3A shows an initial content IC of a digital document 20 as displayed on the display 5 of the computing device. The initial content IC comprises handwritten input strokes S captured as a plurality of ink points. The initial content may be input on the input area 4 of the computing device DV. The digital document 20 may be retrieved from the memory 7.

The digital document 20 is processed to segment the input strokes S into different structural objects such as text or non-text blocks. The handwritten strokes S of the initial content IC are classified as text and segmented into the text blocks, as described above.

Figure 3B shows the initial content IC of the digital document 20 segmented into the twelve text blocks 111 to 122, corresponding in this example to twelve text-lines. Each stroke S of the initial content IC is characterized by a plurality of features of a feature vector and is linked to a block ID arising from the classification and segmentation processes. The block ID corresponds to an object identification of a block to which a stroke belongs to.

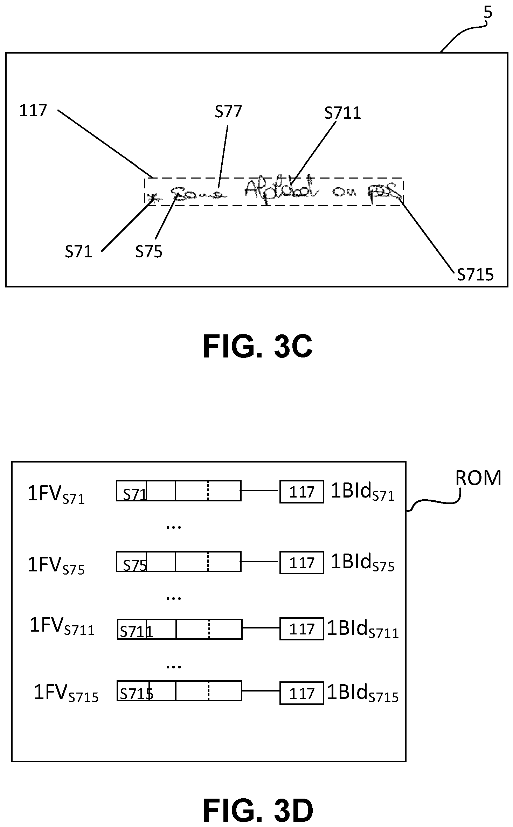

As an illustrative example on figure 3C, the seventh line of the initial content IC is shown as displayed on the display 5. The seventh line of the initial content IC is segmented in this example as one text block, referred to and identified as text-line 117.

The text-line 117 is formed by grouping the fifteen strokes of the seventh line referenced as stroke S71 to stroke S715.

All the strokes composing the initial content IC are stored as first occurrences of feature vectors 1FVsi in the memory ROM, where i is an integer identifying a corresponding stroke Si among S71 to S715. As illustrative example on figure 3D, the strokes composing the text-line 117 are stored in the memory ROM as first occurrences of feature vectors 1FV_{S71} to 1FV_{S715} including calculated features and a link to the block ID 117 identifying the text-line 117 arising from the classification and the segmentation of the strokes analyzed within the initial content of the digital document.

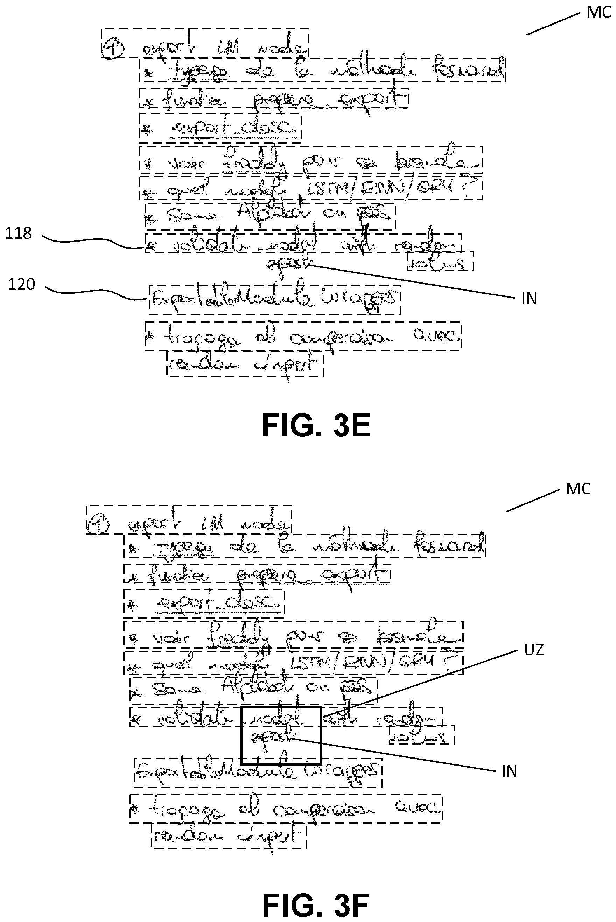

Figure 3E shows a modified content MC of the digital document 20 comprising the content of figure 3B, including the strokes S of the initial content IC, formerly processed and segmented into the twelve text-lines 111 to 122 and a handwriting input IN. The handwriting input IN, is entered by a user, for modifying the initial content IC of the digital document 20. The handwriting input IN is input through a handwriting input interaction on the input area 4 and comprises two input strokes representing text and entered between the text line 118 and the text line 120.

Following the detection of the handwriting input IN, the computing device DV defines an update zone UZ of the digital document 20 around the detected handwriting input IN. The Figure 3F shows the modified content MC including the segmented initial content IC and the handwriting input IN. The update zone UZ is illustrated by a first rectangle around the handwriting input IN. The update zone UZ is representative of the handwriting input strokes IN and is determined around a bounding box of the handwriting input strokes IN (not shown).

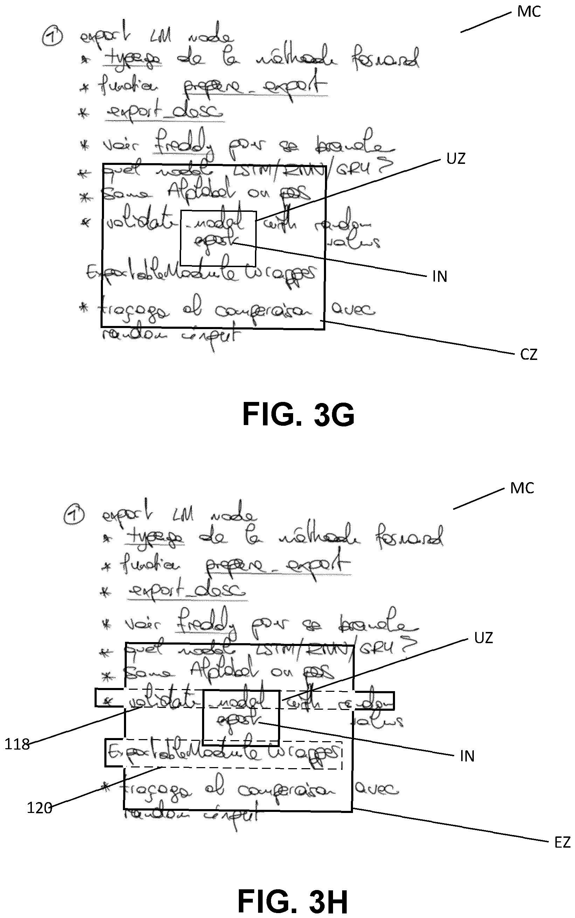

Following the definition of the update zone UZ, the computing device DV defines a context zone CZ defined as an enlarged zone around the update zone. The figure 3G shows the modified content MC, including the initial content IC and the handwriting input IN, the update zone UZ and the context zone CZ. The update zone UZ of figure 3F is shown as a thin-line rectangle and a context zone CZ represented as a bold-line rectangle around the update zone, also other representation of these zones are possible.

Following the definition of the context zone, the computing device DV defines an extended zone EZ comprising the context zone CZ merged with the blocks initially segmented and intersecting with the update zone. The figure 3H shows the modified content MC, including the segmented initial content IC and the handwriting input IN, the update zone UZ and the context zone CZ and an extended zone EZ. The extended zone EZ comprises the context zone CZ of figure 3G merged with the text blocks 118 and 120 as initially segmented in the initial content of the digital document.

The figure 3H shows the two text-lines 118 and 120 processed during the segmentation of the initial version of the document which are intersecting with the update zone UZ. The extended zone is defined to include the context zone merged with the area by the boundaries of the text-lines 118 and 120. The extended zone EZ is delimited by a bold line as the merged areas of the context zone and areas of the intersecting text lines 118 and 120.

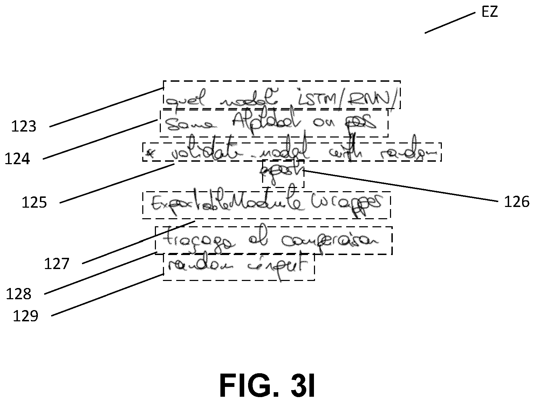

For processing an updated version of the digital document which takes into account the handwriting input IN, the computing device is selecting all the strokes at least partially enclosed in the extended zone EZ and the handwriting input IN. Figure 3I shows a partial view of the digital document comprising the handwriting content enclosed in the extended zone including the handwriting input IN. The selected strokes include part of the strokes of the text lines 116, 117, 121 and 122, all the strokes of the text lines 118 and 120 and the strokes of the handwriting input IN.

The computing device processes the selected strokes of the extended zone EZ. The selected strokes of the extended zone are re-classified including the strokes of the handwriting input IN, therefore the contextual information of the initially segmented strokes has changed according to the modified content of the digital document. The re-classification of strokes of extended zone may be changed compared with the classification outcome of the initial content, therefore, the reclassified strokes are stored as second occurrences of the feature vectors 2FVsi in a temporary memory RAM.

Figure 3I shows the selected strokes reclassified and resegmented into new text blocks 123, 124, 125, 126, 127, 128 and 129 following the analysis of the strokes of extended zone. The re-segmented blocks 123, 124 and 128 are newly modified text-lines compared to the segmented initial content. The re-segmented blocks 125, 127 and 129 are identical to the text-lines 118, 120 and 122 of the segmented initial content. The block 126 represents an added text-line compared to the segmented initial content.

The outcomes of the re-segmentation of the reclassified and resegmented strokes are stored to the second occurrences of the feature vectors 2FVsi in the memory RAM and linked to the newly modified block IDs 2BId_{Si}.

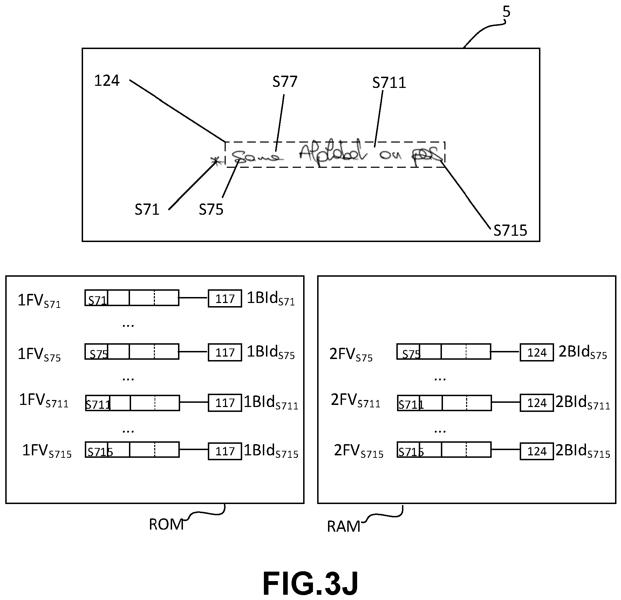

As an illustrative example on figure 3J, the seventh line of the initial content IC is resegmented as a modified text block, referred to and identified as text-line 124. The text-line 124 is formed by grouping the strokes S75 to S715 of the seventh line of the initial content. The strokes composing the text-line 124 are stored in the memory RAM as second occurrences of feature vectors 2FV_{S75} to 2FV_{S715} including calculated features and linked to the modified block IDs (124) arising from the resegmentation of the strokes analyzed within the modified content of the digital document.

The strokes composing the text-line 117 is still stored in the memory ROM as the first occurrences of feature vectors 1FV_{S75} to 1FV_{S715} including calculated features and linked to the modified block IDs (117) arising from the segmentation of the strokes analyzed within the initial content of the digital document.

To further process an updated content of the digital document, the computing device is retrieving the re-segmented strokes belonging to the update zone UZ of the digital document, stored as second occurrences of feature vectors 2FVs in the memory RAM, and the segmented initial content of figure 3B, stored as first occurrences of feature vectors 1FVs stored in the memory ROM.

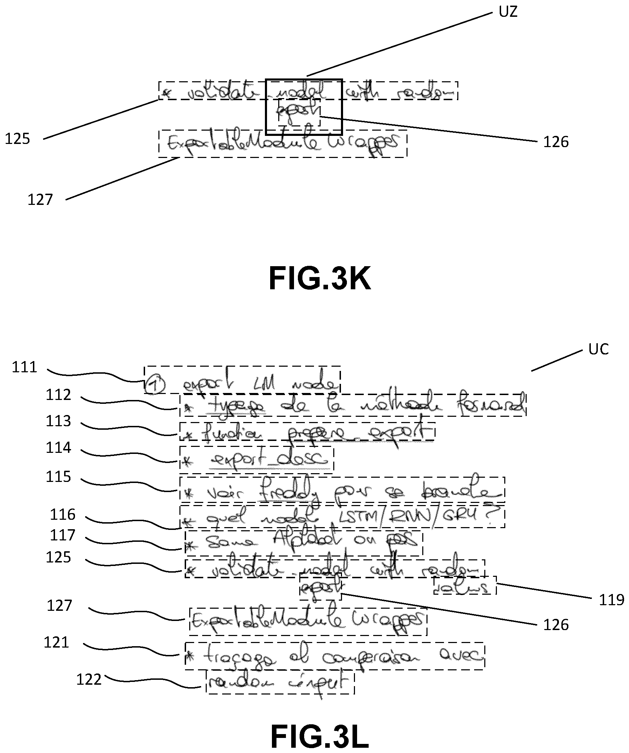

As shown in figure 3K, following the re-segmentation of the re-classified strokes of the extended zone, the update zone UZ of the digital document, now includes the added block 126 and partially includes the updated blocks 125 and 127. The computing device retrieves the reclassified and resegmented strokes forming the blocks at least partially enclosed into the updated zone including the blocks 125, 126 and 127.

The computing device generates an updated content UC of the digital document by overwriting the first feature vectors of the strokes, stored in the memory ROM, forming the blocks 118 and 120 of the initial content as shown in figure 3D by the second feature vectors of the strokes, stored in the memory RAM, forming the updated blocks 125, 127 and the feature vectors of the strokes forming the added block 223 of the update zone.

Figure 3L shows the updated content of the digital document following the analysis of the modified content according to a particular example. The updated content comprises the initially segmented blocks 111 to 117, 119, 121 and 122 together with the modified resegmented blocks 125 to 127, wherein the block 126 includes the handwriting input strokes.

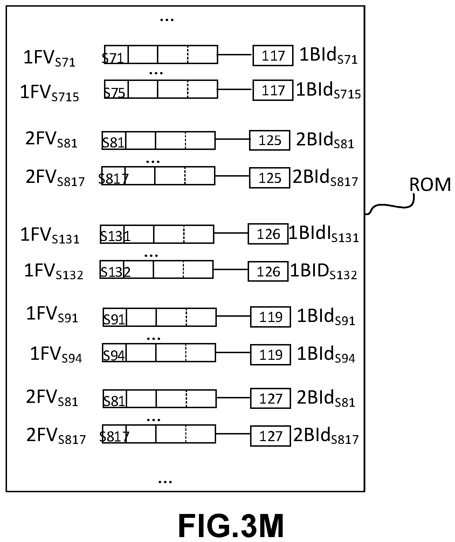

The updated content of the digital document, as displayed on Figure 3M, is stored in the memory ROM, as the first features vectors of the strokes forming the blocks 111 to 117, 119, 121 and 122 arising from an initial classification and segmentation processes, together with the second feature vectors of the strokes forming the blocks 125, 126 and 127 arising from a reclassification and resegmentation processes triggered by the detection of the handwriting input.

While not explicitly described, the embodiments of the present disclosure may be employed in any combination or sub-combination thereof. This disclosure having been described in particular embodiments, it is clear that it is susceptible to numerous modifications and embodiments are possible within the scope defined by the following claims.

## Claims

1. A device (DV) configured to update a digital document by processing a handwriting input interaction on the digital document (20), comprising:
- a display (5) configured to display the digital document;
- an input surface (4) configured to detect the handwriting input interaction on an initial content (IC) of the digital document to generate a modified content (MC) of the digital document, wherein the initial content comprises strokes grouped into initial blocks;
- a memory (7) configured to store the initial content and the modified content of the digital document;
- an update zone defining module (110) configured to define an update zone (UZ), based on the detected input interaction, around the detected handwriting input interaction;
- a context zone defining module (112) configured to define, based on the update zone and the modified content of the digital document, a context zone (CZ) comprising the update zone and strokes temporally or spatially related with the strokes of the update zone;
- an extended zone defining module (114), configured to define, based on the update zone, the context zone and the modified content of the digital document, an extended zone (EZ) including the context zone and the initial blocks intersecting with the update zone;
- a selecting module (116) configured to select strokes enclosed in the extended zone;
- a classifying module (118) configured to classify or reclassify the selected strokes according to predefined categories;
- a segmenting module (120) configured to segment or re-segment the classified strokes;
- a retrieving module (122) configured to select segmented strokes of the update zone following classification and segmentation of the strokes of the extended zone, wherein the selected strokes of the update zone include re-segmented strokes; and
- an overwriting module (124) configured to overwrite the strokes of the update zone of the initial content with the selected segmented strokes of the update zone to generate an updated content of the digital document.

2. The device of claim 1, wherein the detected handwriting input interaction is defined by at least one handwritten stroke for adding content to the digital document.

3. The method of claim 1, wherein the detected handwriting input interaction comprises an erasing gesture for erasing strokes of the initial content, said detected handwriting input interaction being defined by the location of the erased strokes.

4. A method implemented by a computing device (DV) for processing handwriting input interaction on a digital document (20), said method comprising:
- displaying, on the display (5), an initial content (IC) of the digital document, wherein the initial content comprises strokes classified and segmented into initial blocks of predefined categories;
- detecting, on the input area, the handwriting input interaction on the digital document;
- defining an update zone (UZ) around the detected handwriting input interaction;
- defining a context zone (CZ) comprising the update zone and strokes temporally or spatially related with the strokes of the update zone;
- defining an extended zone (EZ) including the context zone and initial blocks intersecting with the update zone;
- selecting all the strokes at least partially included into the extended zone;
- reclassifying the selected strokes of the extended zone according to the predefined categories;
- re-segmenting the reclassified strokes of the extended zone;
- retrieving the re-segmented strokes of the update zone;
- retrieving the classified and segmented strokes of the initial content of the digital document; and
- overwriting the classified and segmented strokes of the update zone of the initial content with the re-segmented strokes of the update zone to generate an updated content of the digital document.

5. The method of claim 4, wherein the update zone is a first area defined around the detected handwriting input interaction.

6. The method of claim 5 wherein the strokes of the context zone, spatially related with the strokes of the update, are enclosed in a second area defined around the first area.

7. The method of claim 5 wherein the strokes of the context zone, temporally related with the strokes of the update zone, are enclosed within a range of temporal proximity from the strokes of the update zone according to a temporal input order of the strokes.

8. The method of any one of claims 4 to 7, wherein the initial content includes handwriting input strokes segmented into blocks of predefined categories.

9. The method of any one of claims 4 to 8, wherein the detected handwriting input interaction comprises at least a single point touch within the input area for adding content or editing the initial content.

10. The method of any one of claims 4 to 9, wherein the detected handwriting input interaction is defined by at least one handwritten stroke for adding content to the digital document.

11. The method of claim 10, wherein the handwriting input interaction comprises an erasing gesture for erasing strokes of the initial content, said detected handwriting input interaction being defined by the location of the erased strokes.

12. The method of claim 10 or 11, wherein the handwriting input interaction comprises a moving gesture for moving strokes of the initial content, said detected handwriting input interaction being defined by the initial location of the moved strokes and/or the final location of the moved strokes.

13. The method of any one of claims 4 to 12, wherein the predefined categories include text and non-text.

14. The method of claim 13, wherein the input strokes classified as text are segmented into text blocks including text-lines.

15. The method of claim 13 or 14, wherein the input strokes classified as non-text are segmented into non-text block including drawings, equations or graph.
